# EUROPEAN PATENT SPECIFICATION

(11) **EP 3 618 670 B1**
(45) Date of publication and mention of the grant of the patent: **02.12.2020**
(21) Application number: 18722930.7
(22) Date of filing: 24.04.2018
(51) Int. Cl.: A47J 31/18, A47J 31/36, A47J 31/02

(54) **A COFFEE MACHINE USED WITH CAPSULE**
KAFFEEMASCHINE ZUR VERWENDUNG MIT KAPSELN
MACHINE À CAFÉ UTILISANT UNE CAPSULE

(30) Priority: 04.05.2017 TR 201706570
(43) Date of publication of application: 11.03.2020
(73) Proprietor: Arçelik Anonim Sirketi, 34445 Istanbul (TR)
(72) Inventor: GUNDUZ, Nihat, 34950 Istanbul (TR); KARAAGAC, Emre, 34950 Istanbul (TR); ALPTEKIN, Ahmet, 34950 Istanbul (TR); HASANREISOGLU, Ali Levent, 34950 Istanbul (TR)
(86) International application number: PCT/EP2018/060408
(87) International publication number: WO 2018/202469

(56) References cited:
- WO-A1-2015/075020
- WO-A1-2016/089328
- WO-A1-2016/193381

## Description

The present invention relates to a coffee machine enabling using of a capsule containing Turkish coffee.

Turkish coffee is cooked by way of mixing finely ground coffee beans with water and heating. Coffee machines capable of cooking Turkish coffee in this manner are present in the art. In order to cook Turkish coffee in varying consistencies and tastes, Turkish coffee machines with capsules in which coffee of varying tastes are placed in a capsule and cooked in the above-mentioned manner are also known in the art. Coffee types such as espresso are prepared by the method of passing high-pressure hot water through coffee and thus blending the coffee aroma with water. Along with Turkish coffee machines capable of using capsule, there are also coffee machines with capsule in which coffee types such as espresso and the like are enabled to cook. In such type of coffee machines with capsule, a surface of the capsule placed in a capsule seat is perforated, high-pressure hot water is pumped into the capsule, and the hot water blent with coffee aroma is transmitted to a cup by the opposite surface of the capsule being perforated. In a method, coffee is prepared by decanting the coffee in a capsule to a coffee pot, adding cold water thereon and then heating, and in another method, coffee is prepared by pumping hot water into a capsule and transmitting the prepared coffee to a cup by perforating a surface of the capsule. A user has to own two different coffee machines capable of cooking coffee in two different methods when he/she desires to experience coffee of both mentioned types.

State of the art international patent application no. WO2011007266 mentions a coffee machine using capsule.

State of the art Turkish patent application no. TR200100549 mentions a coffee machine using capsule. Document WO-A1-2016/193381 discloses a coffee machine suitable for being used with a capsule containing Turkish coffee, said machine comprising a capsule chamber with a cutter.

The aim of the present invention is realizing a coffee machine enabled to prepare coffee in two different manners. A coffee machine according to the invention comprises the features of claim 1. Preferred embodiments of the invention are claimed in the dependent claims.

The coffee machine realized to achieve the aim of the present invention and disclosed in the claims, comprises a second chamber removably installed on a capsule chamber enabling opening capsules containing Turkish coffee, enabling using coffee capsules having coffee varieties of varying types and particularly through which hot water is passed, having spikes enabling perforating the bottom portion of said capsules and enabling draining the cooked coffee from within the capsules, and having a channel enabling transmitting the coffee percolating from the spikes to a cup.

When the user will cook Turkish coffee, he/she places a capsule to the capsule chamber and closes the cover of the coffee machine. Once the cover is closed, the cutter and the stripper provided on the capsule chamber enable cutting the edges of the foil covering the capsule and stripping the foil by folding, and the Turkish coffee in the capsule pours by gravity into the coffee cooking pot in order to be cooked. In a case where the user desires to experience coffee varieties such as espresso and the like, a second chamber is installed on the capsule chamber and upon installing the second chamber on the capsule chamber, the cutter and the stripper switch to a passive position in which they cannot contact the capsule. Coffee cooking process is initiated by introducing pressurized hot water to the capsule from above, and once the spikes provided in the second chamber perforate the bottom portion of the capsule, the coffee prepared with water in the capsule is drained from the capsule by means of the spikes. The coffee percolating from the spikes flows down through the channel and is transmitted to a cup.

In an embodiment of the invention, the second chamber is installed on the capsule chamber from below. Upon the second chamber applying pressure from below to the cutter and the stripper provided on the capsule chamber, the cutter and the stripper abut on the side surfaces of the capsule chamber and thereby switch to the passive position. By this, it becomes possible to place the capsule into the capsule chamber without interacting with the cutter and the stripper. The capsule contacts the spikes at its bottom portion, and once high-pressure hot water is transmitted into the capsule, the spikes enter into the capsule by perforating it.

In another embodiment of the invention, the second chamber is installed on the capsule chamber from above. By installing the second chamber on the capsule seat from above, the second chamber covers the cutter and the stripper, and switches them to the passive position in which they cannot contact the capsule. Capsules containing two different types are thus enabled to be used.

In another embodiment of the invention, introducing pressurized hot water from above to the capsules containing coffee cooked by passing pressurized hot water therethrough is enabled by means of a syringe provided on the head disposed on the cover applying pressure in order to cut the foils of the capsules containing Turkish coffee. The syringe has a passive position in which it remains in the head and does not contact the capsule, and an active position in which it moves out of the head and enables introducing water to the capsule by perforating it. The user performs cooking by bringing the syringe to the active or the passive position according to the type of coffee he/she desires to cook. The syringe is connected to the water chamber of the coffee machine, and water is heated during pumping the water to the syringe.

In another embodiment of the invention, a switch is provided on the cover, enabling the syringe to switch between the active position and the passive position. A handle enabling the syringe to switch to the active position by contacting the switch once the cover is closed, is provided on the second chamber which should be used when the syringe is in the active position. When the second chamber is placed in the coffee machine and is installed on the capsule chamber, it contacts the switch once the cover is closed, and the switch enables the syringe to switch to the active position, making it possible to cook coffee without requiring user intervention.

Capsule containing coffee types cooked by different methods are enabled to be used by means of the coffee machine of the invention.

The coffee machine realized to achieve the aim of the present invention is illustrated in the accompanying drawings, wherein:

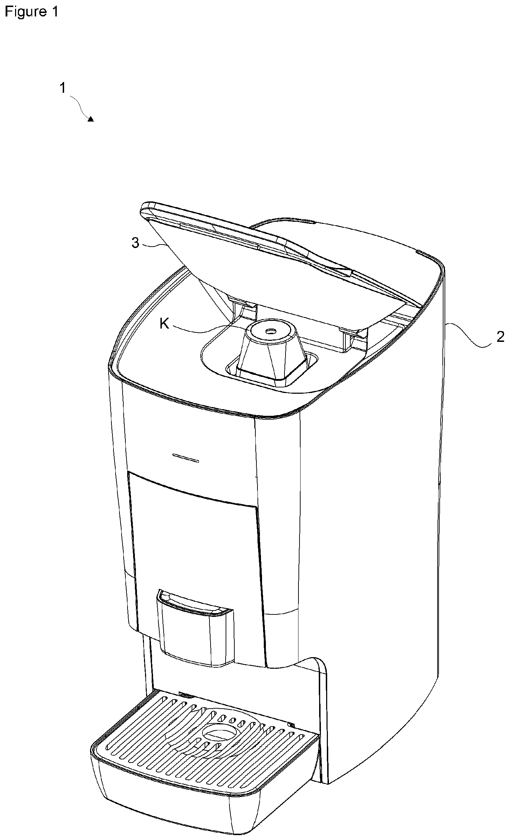

Figure 1 is a perspective view of a coffee machine and a capsule placed thereon.

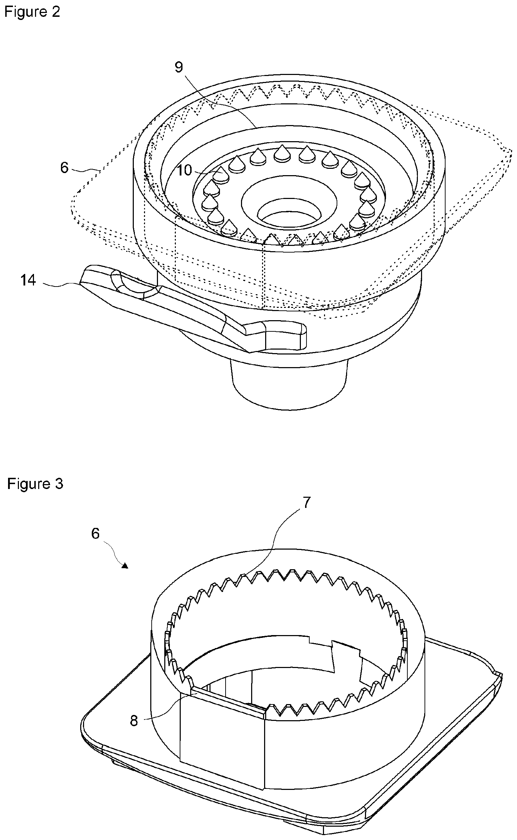

Figure 2 is a perspective view of a capsule chamber and a second chamber.
Figure 3 is a perspective view of a capsule chamber.

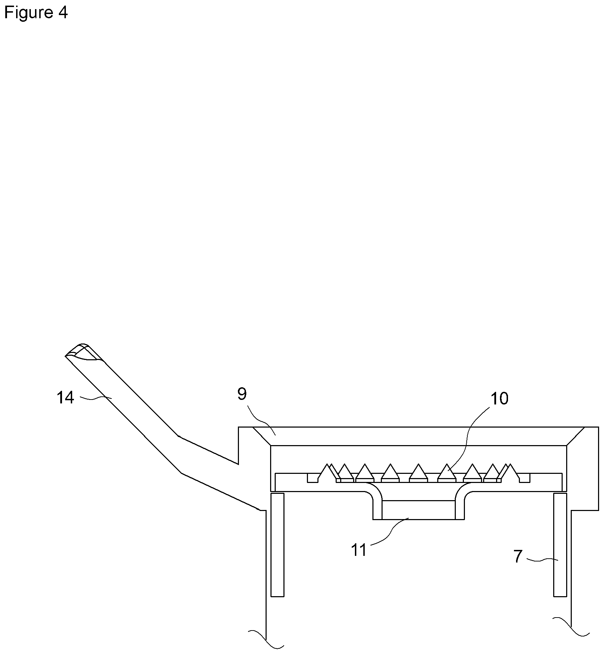

Figure 4 is a schematic view of the second chamber in an embodiment of the invention.

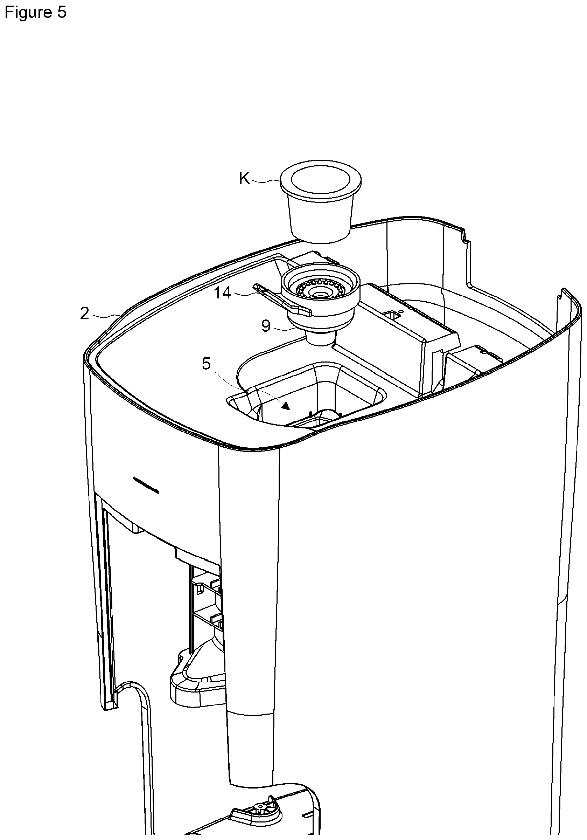

Figure 5 is a view of the capsule and the second chamber being placed in the seat in an embodiment of the invention.

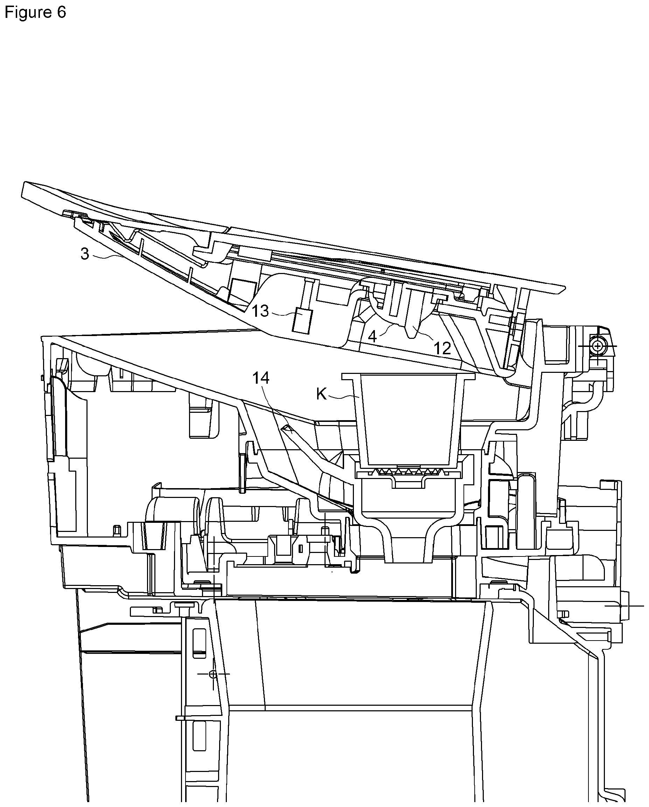

Figure 6 is a schematic view of the second chamber, the capsule and the cover in an embodiment of the invention.

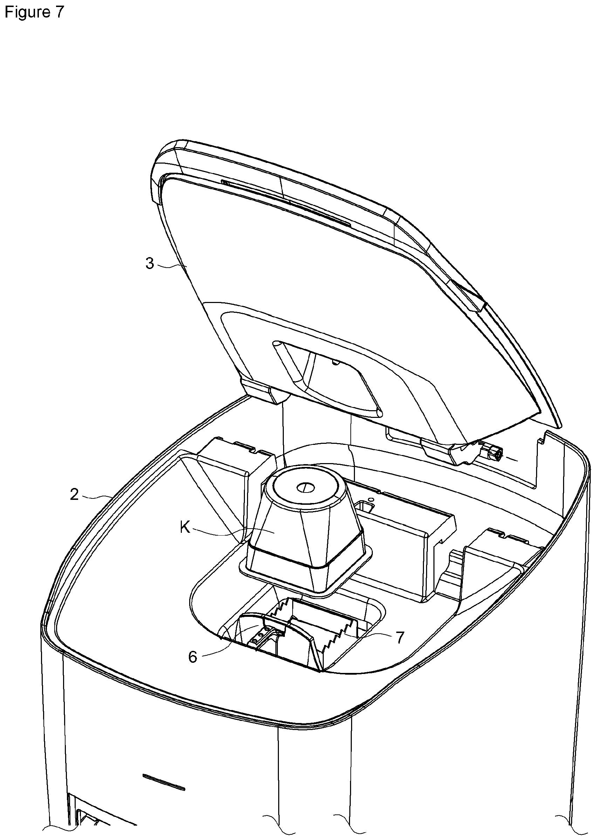

Figure 7 is a view of the capsule and the capsule chamber being placed in the seat in an embodiment of the invention.

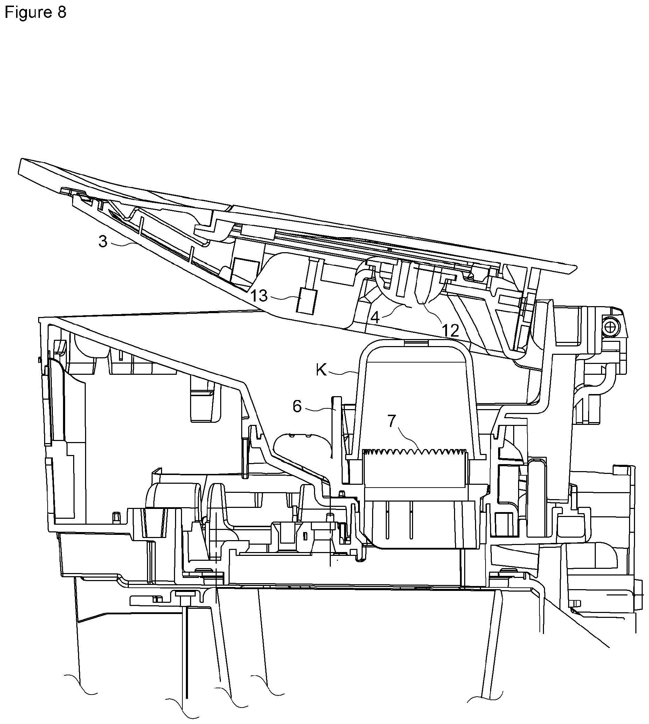

Figure 8 is a schematic view of the capsule chamber, the capsule and the cover in an embodiment of the invention.

The elements in the figures are numbered individually and the correspondence of these numbers are given hereinafter.
1. Coffee machine
2. Body
3. Cover
4. Head
5. Seat
6. Capsule chamber
7. Cutter
8. Stripper
9. Second chamber
10. Spike
11. Channel
12. Syringe
13. Switch
14. Handle

### K. Capsule

The coffee machine (1) is suitable for being used with capsules (K) covered by foil, containing Turkish coffee, and comprises a body (2), a cover (3) enabling covering the upper surface of the body (2) and having a head (4) applying pressure on the capsule (K) upon being closed, a seat (5) provided on the upper portion of the body (2) so as to be below the cover (3), and a capsule chamber (6) of hollow structure removably placed in the seat (5), and having a cutter (7) enabling cutting the foil of the capsule (K) fitted within, upon the head (4) applying pressure to the capsule (K) from above, and a stripper (8) enabling stripping said foil. Turkish coffee is cooked by being mixed with water and being heated. The capsule (K) containing Turkish coffee is placed in the capsule chamber (6), and the head (4) enables the foil to be cut with the help of the cutter (7) by applying pressure from above once the cover (3) is closed. The stripper (8) enables stripping the cut foil. Thus, the coffee in the capsule (K) is transmitted to a coffee cooking pot (not shown in the figures) by being poured, and is mixed with water and cooked. The capsule chamber (6) can be removed from the seat (5) in order to be cleaned.

The coffee machine (1) of the invention comprises a cutter (7) and a stripper (8) having a passive position in which they don't contact the capsule (K), and an active position in which they enable the coffee in the capsule (K) to be poured into the seat (5) by cutting and striping the foil, and further comprises a second chamber (9) removably installed on the capsule chamber (6), enabling the cutter (7) and the stripper (8) to be switched to the passive position, having spikes (10) enabling perforating a capsule (K) used by passing high-pressure hot water therethrough, and a channel (11) through which the coffee percolating from the spikes (10) flows.

In the coffee machine (1) of the invention, capsules (K) containing coffee varieties other than Turkish coffee and cooked by passing pressurized hot water therethrough are enabled to be used by means of the second chamber (9). The second chamber (9) is installed on the capsule chamber (6) by way of firm engagement or other coupling methods, and the cutter (7) and the stripper (8) switch to the passive position upon installing of the second chamber (9). Upon placing a capsule (K) to be used in the capsule chamber (6), the spikes (10) are readily available below the capsule (K). Once the cover (3) is closed and cooking is initiated, high-pressure hot water is introduced to the capsule (K) and the spikes (10) perforate the capsule from below as the pressure in the capsule (K) increases. The prepared coffee passes through the spikes (10) and flows into the channel (11), and is transmitted via the channel (11) and via coffee cooking pot to the cup.

In another embodiment of the invention, the cutter (7) and the stripper (8) are flush with the side walls of the capsule chamber (6), and the second chamber (9) is installed on the capsule chamber (6) from below. Upon installing the second chamber (9) on the capsule chamber (6), the edges of the second chamber (9) enable the cutter (7) and the stripper (8) to switch to the passive position by applying outwards pressure to them. In this embodiment, the cutter (7) and the stripper (8) are disposed circularly on the capsule chamber (6), and upon installing the second chamber (9) on the capsule chamber (6) from below, the cutter (7) and the stripper (8) bend towards the sides and become flush with the side walls of the capsule chamber (6).

In another embodiment of the invention, the second chamber (9) is installed on the capsule chamber (6) from above, and enable the cutter (7) and the stripper (8) to switch to the passive position by covering them. In this embodiment, the cutter (7) and the stripper (8) are disposed in a quadratic/tetragonal manner on the capsule chamber (6), and once the second chamber (9) is installed on the capsule chamber (6) from above, the second chamber (9) rests on the cutter (7) and the stripper (8), switching them to the passive position. The tetragonal or circular positioning of the cutter (7) and the stripper (8) are described for exemplary purposes, and in both embodiments the second chamber (9) is installable on the capsule chamber (6) matching varying shapes of the capsule chamber (6).

In another embodiment of the invention, the coffee machine (1) comprises a syringe (12) provided on the cover (3), having a passive position in which it remains in the head (4), and an active position in which it moves out of the head (4) enabling sending pressurized hot water into the capsule (K) by perforating it. When a capsule (K) containing Turkish coffee is used, the syringe (12) is switched to the passive position and the head (4) applies pressure on the capsule (K), enabling the capsule (K) to be opened with the help of the cutter (7) and the stripper (8) in their active position. When the syringe (12) is switched to the active position, it enters the capsule (K) containing coffee to be cooked with pressurized hot water, from above upon closing of the cover (3), enabling sending pressurized hot water into the capsule (K). A water chamber (not shown in the figures) disposed on the coffee machine (1) is connected to the syringe (12), a water pump (not shown in the figures) enabling pumping water to the coffee cooking pot when Turkish coffee is cooked, enables pumping water also to the syringe (12), and a heater (not shown in the figures) enabling heating the coffee cooking pot when cooking Turkish coffee enables also heating the water transmitted to the syringe (12).

In another embodiment of the invention, the coffee machine (1) comprises a switch (13) provided on the cover (3), enabling the syringe (12) to switch between the active position and the passive position, and a handle (14) provided on the second chamber (9), enabling the syringe (12) to switch to the active position by contacting the switch (13) once the second chamber (9) is placed in the seat (5) and the cover (3) is closed. The switch (13) enables the syringe (12) to switch between the active position and the passive position by enabling it to be moved back and forth. The handle (14) on the second chamber (9) enables the user to easily hold the second chamber (9), and also enables the syringe (12) to switch to the active position by contacting the switch (13) upon closing of the cover (3). By this, the syringe (12) is enabled to automatically and spontaneously switch to the active position when it is desired to cook coffee with a capsule (K) containing a different variety of coffee, and it is not required for the user to make any action.

In the coffee machine (1) of the invention, capsules (K) containing coffee cooked in two different methods are enabled to be used thanks to the second chamber (9) and the capsule chamber (6). When the user desires to make coffee cooked by passing pressurized hot water therethrough, such as espresso, he/she uses the second chamber (9), and enables pressurized hot water to be passed through the capsule (K) by means of the syringe (12), and cooked coffee to be transmitted to a cup with the help of the spikes (10) disposed on the second chamber (9).

## Claims

1. A coffee machine (1) suitable for being used with capsules (K) covered by foil and containing Turkish coffee, said coffee machine comprising a body (2), a cover (3) configured to enable covering the upper surface of the body (2) and having a head (4) configured to apply pressure on the capsule (K) upon being closed, a seat (5) provided on the upper portion of the body (2) so as to be below the cover (3), and a capsule chamber (6) of hollow structure removably placed in the seat (5), said capsule chamber having a cutter (7) configured to enable cutting the foil of the capsule (K) fitted within, upon the head (4) applying pressure to the capsule (K) from above and said capsule chamber further comprising a stripper (8) configured to enable stripping the cut foil wherein
- the cutter (7) and the stripper (8) are configured to have: a passive position in which they don't contact the capsule (K), and an active position in which they enable the coffee in the capsule (K) to be poured into the seat (5) by cutting and striping the foil,
- **and** wherein a second chamber (9) is removably installed on the capsule chamber (6), such that said second chamber is configured to enable the cutter (7) and the stripper (8) to be switched to the passive position, said second chamber (9) having spikes (10) enabling perforating a capsule (K) used by passing high-pressure hot water therethrough, and a channel (11) through which the coffee percolating from the spikes (10) flow.

2. A coffee machine (1) according to claim 1, **characterized by** the cutter (7) and the stripper (8) being flush with the side walls of the capsule chamber (6) in the passive position, **and by** the second chamber (9) being installed on the capsule chamber (6) from below.

3. A coffee machine (1) according to claim 1, **characterized by** the second chamber (9) being installed on the capsule chamber (6) from above, switching the cutter (7) and the stripper (8) to the passive position by covering them.

4. A coffee machine (1) according to any one of the preceding claims, **characterized by** a syringe (12) provided on the cover (3), having a passive position in which it rests in the head (4), and an active position in which it moves out of the head (4) enabling sending pressurized hot water into the capsule (K) by perforating it.

5. A coffee machine (1) according to claim 4, **characterized by** a switch (13) provided on the cover (3) and enabling the syringe (12) to switch between the active position and the passive position, **and by** a handle (14) provided on the second chamber (9), and enabling the syringe (12) to switch to the active position by contacting the switch (13) once the second chamber (9) is placed in the seat (5) and the cover (3) is closed.

## Patentansprüche

1. Eine Kaffeemaschine (1), für die Verwendung mit Kapseln (K), die mit Folien bedeck sind und türkischen Kaffee enthalten, **umfasst** einen Körper (2), eine Abdeckung (3), die so konfiguriert ist, eine Abdeckung (3), die konfiguriert ist, um das Abdecken der oberen Oberfläche des Körpers (2) zu ermöglichen und einen Kopf (4) zu haben, der beim Schließen einen Druck auf die Kapsel (K) konfiguriert, wobei ein Sitz (5) am oberen Teil des Körpers vorgesehen ist (2) so, dass sie sich unter der Abdeckung befinden (3), und eine Kapselkammer (6) mit hohler Struktur, die entfernbar in dem Sitz (5) angeordnet ist, wobei die Kapselkammer einen Cutter (7) aufweist, der konfiguriert ist, um das Schneiden der Folie der Kapsel (K) zu ermöglichen, die auf dem Kopf (4) unter Druck angebracht ist und zu der Kapsel (K) von oben und der Kapselkammer, die ferner einen Abstreifer (8) umfasst, der konfiguriert ist, um das Abstreifen der geschnittenen Folie zu ermöglichen, wobei
Der Cutter (7) und der Stripper (8) so konfiguriert sind, dass sie eine passive Position haben, in der sie die Kapsel (K) nicht berühren, und eine aktive Position, in der sie das Gießen des Kaffees in der Kapsel (K) in den Sitz (5) durch Schneiden und Abziehen der Folie ermöglichen
**und** wobei eine zweite Kammer (9) entfernbar an der Kapselkammer (6) installiert ist, so dass die zweite Kammer konfiguriert ist, um zu ermöglichen, dass der Fräser (7) und der Stripper (8) in die passive Position geschaltet werden, die zweite Kammer (9) mit Spikes (10), die das Perforieren einer Kapsel (K) ermöglichen, die durch Durchleiten von heißem Hochdruckwasser verwendet wird, und eines Kanals (11), durch den der aus den Spikes (10) versickernde Kaffee fließt.

2. Eine Kaffeemaschine (1), wie in Anspruch 1 aufgeführt, **ist dadurch gekennzeichnet, dass** der Fräser (7) und der Abstreifer (8) in passiver Position mit den Seitenwänden der Kapselkammer (6) bündig sind **und** die zweite Kammer (9) von unten auf der Kapselkammer (6) installiert werden.

3. Eine Kaffeemaschine (1), wie in Anspruch 1 aufgeführt, **ist dadurch gekennzeichnet, dass** die zweite Kammer (9) von oben in die Kapselkammer (6) eingebaut wird, wodurch der Fräser (7) und der Abstreifer (8) durch Abdecken in die passive Position gebracht werden.

4. Eine Kaffeemaschine (1), wie in einem der vorherigen Ansprüchen aufgeführt, **ist dadurch gekennzeichnet, dass** eine Spritze (12) mit einer passive Position auf der Abdeckung (3) vorgesehen ist, in der sie im Kopf (4) ruht, und einer aktiven Position, in der es sich aus dem Kopf (4) herausbewegt, um unter Druck stehendes heißes Wasser durch Perforieren in die Kapsel (K) zu leiten.

5. Eine Kaffeemaschine (1), wie in Anspruch 4 aufgeführt, **ist dadurch gekennzeichnet, dass** ein Schalter (13) an der Abdeckung (3) vorgesehen ist und der Spritze (12) es ermöglicht, zwischen der aktiven Position und der passiven Position umzuschalten, **und durch** einen Griff (14), der an der zweiten Kammer (9) vorgesehen ist, und das Aktivieren der Spritze (12) in die aktive Position umschalten, indem der Schalter (13) berührt wird, sobald die zweite Kammer (9) in den Sitz (5) eingesetzt und die Abdeckung (3) geschlossen ist.

## Revendications

1. Une machine à café (1) adaptée pour être utilisée avec des capsules (K) recouvertes d'une feuille et contenant du café turc, ladite machine à café **comprenant** un corps (2), un couvercle (3) configuré pour permettre de couvrir la surface supérieure du corps (2) et ayant une tête (4) configurée pour exercer une pression sur la capsule (K) lorsqu'elle est fermée, un siège (5) prévu sur la partie supérieure du corps (2) de manière à se trouver sous le couvercle (3), et une chambre à capsule (6) de structure creuse placée de manière amovible dans le siège (5), ladite chambre à capsule ayant un dispositif de coupe (7) configuré pour permettre de couper la feuille de la capsule (K) placée à l'intérieur, sur la tête (4) appliquant une pression sur la capsule (K) depuis le dessus et ladite chambre à capsule comprenant en outre un dispositif de séparation (8) configuré pour permettre de séparer la feuille coupée, dans lequel
le cutter (7) et le décapsuleur (8) sont configurés pour avoir une position passive dans laquelle ils n'entrent pas en contact avec la capsule (K), et une position active dans laquelle ils permettent de verser le café de la capsule (K) dans le siège (5) en coupant et en raclant la feuille,
**et** dans laquelle une deuxième chambre (9) est installée de manière amovible sur la chambre à capsule (6), de sorte que ladite deuxième chambre est configurée pour permettre au cutter (7) et au décapsuleur (8) d'être mis en position passive, ladite deuxième chambre (9) ayant des pointes (10) permettant de perforer une capsule (K) utilisée en faisant passer de l'eau chaude à haute pression à travers, et un canal (11) à travers lequel s'écoule le café percolant des pointes (10).

2. Une machine à café (1) selon la déclaration 1, **est caractérisée en ce que** le cutter (7) et le décapsuleur (8) sont à fleur des parois latérales de la chambre à capsule (6) en position passive, **et que** la deuxième chambre (9) est installée sur la chambre à capsule (6) par le bas.

3. Une machine à café (1) selon la déclaration 1, **est caractérisée en ce que** la deuxième chambre (9) est installée sur la chambre de la capsule (6) par le haut, ce qui permet de mettre le cutter (7) et le décapsuleur (8) en position passive en les recouvrant.

4. Une machine à café (1) selon l'une quelconque des déclarations précédentes, est **caractérisée en ce qu'elle comporte une seringue (12) prévue sur le couvercle (3), ayant une position passive dans laquelle elle repose dans la tête (4), et une position active dans laquelle elle sort de la tête (4) permettant d'envoyer de l'eau chaude sous pression dans la capsule (K) en la perforant.**

5. Une machine à café (1) selon la déclaration 4, **est caractérisée en ce qu'**un interrupteur (13) est prévu sur le couvercle (3) et permet à la seringue (12) de passer de la position active à la position passive, **et en ce qu**'une poignée (14) est prévue sur la deuxième chambre (9) et permet à la seringue (12) de passer à la position active en entrant en contact avec l'interrupteur (13) une fois que la deuxième chambre (9) est placée dans le siège (5) et que le couvercle (3) est fermé.
